Europäisches Patentamt

European Patent Office

Office européen des brevets

(19)

(11) **EP 0 473 500 B1**

(12) **FASCICULE DE BREVET EUROPEEN**

(45) Date de publication et mention
de la délivrance du brevet:
**06.11.1996   Bulletin 1996/45**

(51) Int Cl.6: **G01N 29/02**

(21) Numéro de dépôt: **91402298.3**

(22) Date de dépôt: **22.08.1991**

(54) **Mesure de la répartition de constituants d'un mélange par ultrasons**

Ultraschallmessung von Bestandteilenverteilung einer Mischung

Measurement of the components distribution of a mixture by ultrasounds

(84) Etats contractants désignés:
**BE DE DK GB IT NL**

(30) Priorité: **27.08.1990   FR 9010755**

(43) Date de publication de la demande:
**04.03.1992   Bulletin 1992/10**

(73) Titulaire: **INSTITUT FRANCAIS DU PETROLE
92502 Rueil-Malmaison (FR)**

(72) Inventeurs:
• **Lenormand, Roland
F-92500 Rueil Malmaison (FR)**
• **Forbes, Pierre
F-92500 Rueil Malmaison (FR)**
• **Hoyos, Moricio
F-93800 Epinay S/Seine (FR)**
• **Deflandre, Françoise
F-95100 Argenteuil (FR)**

(56) Documents cités:
**FR-A- 2 556 836**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

## Description

La présente invention concerne un procédé de mesure de la répartition des concentrations de constituants d'un milieu en centrifugation, un dispositif notamment pour la mise en oeuvre du procédé et l'utilisation du dispositif.

L'industrie pétrolière utilise pour la gestion de l'exploitation d'un gisement des simulations numériques visant à prévoir le comportement du dit gisement soumis à une méthode d'exploitation donnée. Cette prévision nécessite notamment la caractérisation des propriétés des écoulements dans le gisement, parmi lesquelles, l'évolution de la pression capillaire et des perméabilités relatives des fluides en présence.

Ces dernières propriétés sont déterminantes dans l'évaluation des réserves exploitables ou de la productivité d'un gisement par exemple. De ce fait différents moyens de mesure de ces propriétés, sur des échantillons de réservoir, ont été proposés depuis plusieurs décades.

La centrifugation est parmi les méthodes les plus utilisées du fait de sa rapidité et simplicité de mise en oeuvre et de sa possible automatisation (Hagoort J., 1980 : Oil Recovery by Gravity Drainage. SPE Journal, 139-150; Hassler G.L. et Brunner E., 1945 : Measurements of capillary Pressure in Small Core Samples,. Trans. AIME, 160, 114-123).

Elle peut être utilisée selon le brevet FR 2556836 pour la séparation fractionnée et l'analyse granulométrique de particules en suspension dans un liquide, couplée à un capteur d'épaisseur à ultrasons situé à l'extérieur du rotor en regard de la chambre de centrifugation.

Cependant, dans son application usuelle, la centrifugation ne permet de mesurer que la saturation moyenne des fluides dans l'échantillon en centrifugation. C'est donc une méthode indirecte d'obtention de la dépendance des pressions capillaire, Pc, et perméabilité relatives en fonction des saturations locales, S.

La pression capillaire Pc(S) est obtenue à partir de la mesure de la saturation moyenne, en régime stationnaire, à différentes vitesses de centrifugation, moyennant certaines approximations de calcul et certaines hypothèses sur la répartition exacte des fluides et les conditions d'écoulement dans l'échantillon (conditions aux limites, effets d'extrémité, homogénéité de l'échantillon, déplacement uniforme...). Les approximations et les techniques de calcul ont été progressivement améliorées et semblent aujourd'hui satisfaisantes. En revanche les hypothèses sur la répartition locale des fluides et sur les conditions d'écoulement restent controversées.

Les perméabilités relatives, kr(S), sont obtenues à partir de l'évolution, en régime non stationnaire, de la saturation moyenne et de Pc(S) suivant un calcul explicite ou suivant un ajustement implicite par un modèle numérique simulant la centrifugation, calcul et ajustement tous deux connus de l'homme du métier.

Il apparait que ces perméabilités relatives sont très dépendantes de la fonction Pc(S). Par ailleurs, des perméabilités relatives très différentes peuvent conduire à des évolutions comparables de la saturation moyenne dans un échantillon en centrifugation, bien que la distribution locale de la saturation évolue de façon très différente.

Tant pour le calcul de Pc(S) que pour celui de kr(S), il apparait ainsi que la mesure de la saturation moyenne au cours de la centrifugation n'est pas assez discriminante . La mesure des saturations locales dans l'échantillon apparait dès lors comme un moyen d'obtenir une mesure directe de Pc(S), un calcul discriminant de kr(S) et une vérification des hypothèses usuelles sur la répartition exacte des fluides dans l'échantillon.

Visant à cette amélioration Vinegar et al. (US, 4 671 102) présentent un moyen de mesure de la distribution locale des saturations dans un échantillon en centrifugation. Ce moyen consisterait en l'utilisation d'une ou plusieurs sources électromagnétiques (rayon -X ou autre radiation) irradiant l'échantillon, puis en l'analyse des radiations transmises. Dans sa description ce moyen semble tout à fait apte à fournir la distribution des saturations locales et leur variation dans le temps au cours d'une centrifugation. Cependant, à notre connaissance, la mise en oeuvre de cette technique se heurte à des difficultés techniques non encore résolues, qui peuvent être dues à l'encombrement de la source ou aux dangers que présente la manipulation de rayons X ou autres radiations, ou encore à l'absorption de ces radiations par les nombreuses parties métalliques que comporte habituellement une centrifugeuse.

On propose donc un autre moyen de mesure de la distribution des saturations de fluides dans un milieu poreux en centrifugation, plus simple à mettre en oeuvre, considérablement moins cher et permettant d'obtenir de bons résultats. On utilise des émissions de signaux mécaniques qui sont transmis notamment à travers la plupart des métaux. Ce moyen peut donc permettre la mesure sur des milieux sous des pression et température élevées (comme celles pouvant exister dans un gisement pétrolier) qui nécessitent habituellement l'utilisation d'enceintes métalliques rendant inefficace la méthode antérieure.

En outre ce moyen peut s'appliquer de façon plus générale à la mesure de concentrations de constituants d'un système en centrifugation, tel que des concentrations de particules dans une suspension ou des concentrations en fluides dans une émulsion par exemple.

De manière plus précise, on propose un procédé de mesure de la répartition des concentrations de constituants d'un milieu contenant au moins un fluide, comprenant la mise en centrifugation, dans ces conditions appropriées, du milieu dans une centrifugeuse et caractérisé par les étapes suivantes :

a) on émet, pendant la centrifugation un signal mécanique dans une gamme de fréquences et d'intensités adéquates, à partir d'au moins un point d'émission (19) au contact ou au voisinage immédiat du milieu (16) en centrifugation,

b) on reçoit le signal transmis correspondant par au moins un point de réception (20) au contact ou au voisinage immédiat du milieu en centrifugation après que le signal mécanique ait traversé au moins une partie du dit milieu s'étendant entre ledit point d'émission et ledit point de réception,

c) on mesure, pour chaque couple de points d'émission et de réception, au moins une caractéristique de propagation du signal mécanique, telle que la vitesse de propagation dans le milieu entre le point d'émission et le point de réception dudit signal,

d) on détermine, par des moyens de traitement appropriés, à partir des dites mesures de caractéristiques de propagation du signal, la répartition des concentrations des constituants dans le milieu.

La présente invention présente les avantages suivants :

- elle est d'une mise en oeuvre simple et rapide,
- elle est peu couteuse,
- elle ne nécessite pas de dopage ou de modification des constituants à mesurer,
- elle n'utilise pas de radiation dangereuses,
- elle permet d'opérer à travers un grand nombre de matériaux souvent opaques aux radiations, rayons X notamment. En particulier elle permet donc la mesure pour des milieux sous des conditions élevées de température ou de pression qui nécessitent l'utilisation d'enceintes métalliques.

Le milieu étudié sera de préférence un milieu poreux contenant deux fluides. Selon une autre caractéristique de l'invention, une pluralité d'émetteurs peuvent émettre simultanément ou successivement un signal mécanique en une pluralité de points sur le milieu ou dans son voisinage immédiat.

Selon une autre caractéristique, lors de l'étape b, au moins un point d'émission peut être utilisé, au moins une fois comme point de réception.

Selon une autre caractéristique du procédé, on peut répéter à différent instants les étapes a, b, cet d ci-dessus en vue d'obtenir la répartition des constituants du milieu à ces instants déterminés correspondant par exemple à des stades différents d'avancement de la centrifugation.

Selon une autre caractéristique du procédé, une pluralité de points d'émission et une pluralité de points de réception peuvent être disposées dans le plan d'une tranche du milieu mis en centrifugation. On détermine alors, selon le procédé de l'invention, la répartition des concentrations des constituants du dit milieu dans ce plan. On obtient ainsi une image à deux dimensions de la répartition de ces constituants dans ce plan.

On peut enfin, selon une autre caractéristique du procédé, disposer une pluralité de points d'émission et une pluralité de points de réception suivant une direction donnée. On détermine alors les concentrations moyennes des constituants suivant cette direction, obtenant de ce fait un profil de concentrations (dimension 1). Cette direction peut être préférentiellement celle de l'axe du bras de la centrifugeuse.

L'invention concerne aussi un appareil de mesure de la répartition des concentrations de constituants d'un milieu, caractérisé par ce qu'il comporte en combinaison :

- une centrifugeuse ayant un nombre prédéterminé de porte-échantillons (5) contenant le dit milieu (16) et étant adaptée à opérer à une pluralité de vitesses de rotation,
- au moins une source (19) d'émission des signaux mécaniques, adaptée à délivrer une gamme de fréquences et d'intensités adéquates, située à l'intérieur ou au voisinage immédiat des porte-échantillons (5),
- au moins un moyen (20) de réception des signaux transmis ayant traversé le milieu, contenu à l'intérieur ou dans le voisinage immédiat des porte-échantillons,
- ladite centrifugeuse comprenant des moyens, de contacts (6) tournants, adaptés pour la transmission, pendant la rotation, des signaux électriques produisant les signaux mécaniques émis et les moyens de contacts tournants étant en outre adaptés à la transmission, durant la rotation, de signaux électriques produits par les moyens de réception (20),
- des moyens de mesure (14) d'une caractéristique de propagation des signaux mécaniques transmis, reliés aux sources d'émission et aux moyens de réception par l'intermédiaire des dits moyens de contacts tournants.
- des moyens de traitement et de contrôle (15), pour déterminer la mesure de la répartition des concentrations, connectés aux dits moyens de mesure et à la dite centrifugeuse.

Dans le cas de référence, l'invention est appliquée avantageusement à la mesure des saturations de deux fluides dans un milieu poreux en centrifugation.

Les mesures obtenues peuvent alors être utilisées avec plus de précision pour le calcul de la pression capillaire et des perméabilités relatives en fonction des dites saturations locales.

La centrifugeuse utilisée peut être une centrifugeuse usuelle qui peut être automatisée, susceptible de permettre la rotation du milieu poreux à différentes vitesses de rotation constantes dans le temps ou non et préférentiellement comprises entre 500 et 10000 tours par minute.

Le milieu poreux est en général placé dans des godets, porte-échantillons, métalliques par exemple. Ceux-ci peuvent éventuellement comporter un embout destiné à recueillir et mesurer les quantités de fluide sortant du milieu pendant la centrifugation. Un éclairage alternatif, synchronisé avec la rotation (stroboscopie) peut par exemple être utilisé pour cette mesure.

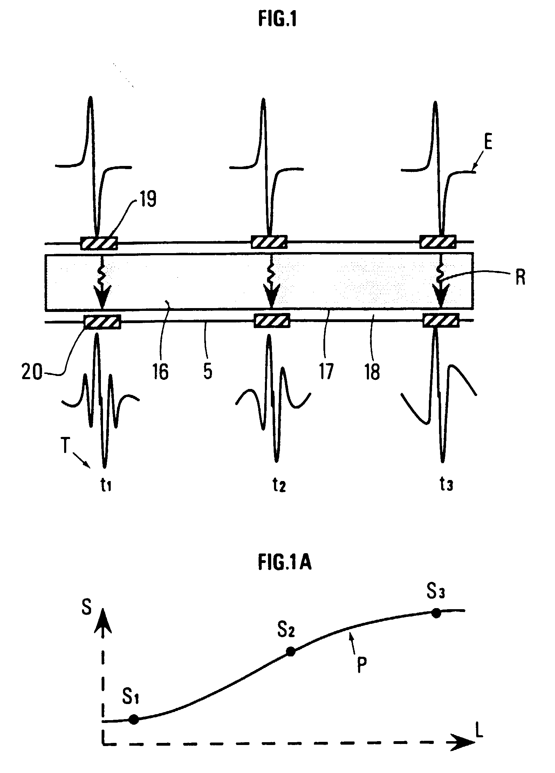

Un ou plusieurs générateurs de signaux mécaniques sont en général placés au voisinage immédiat ou à l'intérieur du porte-échantillon, c'est à dire à la périphérie ou au contact du milieu poreux, ou à la périphérie ou à l'intérieur du godet le contenant, ou entre le milieu et le godet (Fig. 1).

Ces générateurs peuvent être par exemple des transducteurs acoustiques, céramiques piézoélectriques ou non. Ils sont adaptés à délivrer des signaux mécaniques de fréquences généralement comprises entre 100 et 2000 kilohertz.

Les signaux mécaniques émis peuvent être suffisamment intenses et brefs pour traverser le milieu en centrifugation en un temps suffisamment court pour que le déplacement des fluides à l'intérieur du milieu soit très faible pendant ce temps.

L'intensité du signal émis sera choisie de telle façon que le signal reçu soit accessible au détecteur. Il sera fonction du milieu poreux traversé. Il en est de même pour la ou les longueurs d'ondes du signal d'émission.

Ces signaux peuvent être de manière préférée des ondes acoustiques de fréquences comprises entre 100 et 2000 kilohertz et avantageusement entre 250 et 500 kilohertz, générées par des tensions électriques (Fig. 1), elle-mêmes générées, contrôlées, voire amplifiées, par un générateur de fonctions. Le plus souvent on utilisera une onde monofréquence dans les mêmes gammes, par exemple.

Un ou plusieurs générateurs de signaux mécaniques peuvent être activés, simultanément ou successivement. Dans le cas d'émissions successives, dites série d'émissions, la succession pourra être suffisamment brève pour que le déplacement des fluides à l'intérieur soit très faible, afin d'obtenir des émissions quasi-simultanées au regard des vitesses d'évolution des fluides dans le milieu.

Les signaux mécaniques peuvent être reçus par un ou plusieurs récepteurs, qui peuvent être éventuellement les émetteurs eux-mêmes, placés en général au voisinage immédiat ou à l'intérieur du porte échantillon, c'est à dire à la périphérie ou au contact du milieu poreux, ou à la périphérie ou à l'intérieur du godet le contenant, ou entre le milieu et le godet, ou encore sur ou dans le support portant le godet.

Les signaux reçus peuvent être transformés en signaux électriques éventuellement amplifiés.

Les signaux mécaniques reçus sont comparés au signaux émis, par exemple à partir de la comparaison entre les signaux électriques d'émission et de réception.

A chaque émission, ou série d'émission, des caractéristiques de la propagation des signaux mécaniques entre chaque paire d'émetteur-récepteur peuvent être déduites de cette comparaison. Ces caractéristiques peuvent être par exemple la vitesse de propagation des signaux, leur temps de déplacement ou leur atténuation (Fig. 1).

Pour chaque émission, ou série d'émission, une valeur moyenne de ces caractéristiques est obtenue pour chaque paire émetteur-récepteur. Dans le cas de série d'émission, une méthode de type tomographie peut être utilisée pour reconstruire une image à 2 ou 3 dimensions des valeurs locales de ces caractéristiques.

Une méthode de calibration, dont un exemple est décrit ci-après, permet de transformer chacune de ces valeurs en une valeur de la concentration des constituants du système.

Suivant le nombre et la position des paires émetteur-récepteur, un profil (Fig. 1), une projection à 2 dimensions ou une répartition à 3 dimensions des concentrations est ainsi obtenue.

La méthode de calcul peut utiliser un ordinateur couplé à l'ensemble de l'appareillage. Un exemple de cette méthode est décrit ci-après.

L'ensemble de la procédure peut être répétée à différents temps, de façon périodique ou non. On obtient ainsi, pour différent instants, un profil, une projection à 2 dimensions ou une répartition à 3 dimensions des concentrations. Une méthode de calcul peut être utilisée alors pour obtenir les variations dans le temps des dits profil, projection à 2 dimensions ou répartition à 3 dimensions des concentrations, ainsi que les variations dans le temps des concentrations en un ou plusieurs endroits particuliers du milieu en centrifugation.

L'ensemble de la méthode peut être mis en oeuvre pour des système sous température, T, et pression de confinement, P, contrôlées. Par exemple, les répartitions et concentrations des constituants peuvent être obtenues dans des conditions T, P des réservoirs pétroliers.

L'invention sera mieux comprise au vu des figures ci-dessous illustrant de manière schématique le procédé et le dispositif selon l'invention, parmi lesquelles:

- les figures 1 et 1A présentent le principe général de l'utilisation de signaux mécaniques pour la mesure des saturations de fluides dans un milieu poreux en centrifugation et la détermination de profils de saturation le long du milieu poreux,

- la figure 2 montre une vue schématique, en coupe, de la centrifugeuse équipée de contacts tournants,
- les figures 3 a, b, c représentent une vue détaillée, en coupe, d'un godet de centrifugeuse, contenant le système d'émission-réception des signaux mécaniques et le milieu en centrifugation,
- la figure 4 montre un diagramme schématique des différents appareils et de leurs connexions relatifs aux moyens de contrôle et de traitement du dispositif selon l'invention,
- la figure 5 schématise une vue, en perspective, d'un exemple de système de contacts tournant monté sur l'axe du rotor de la centrifugeuse,
- les figures 6A, 6B et 6D montrent des exemples de disposition de transducteurs acoustiques dans le plan d'une coupe donnée (a) pour l'acquisition multiple (b) de mesures des vitesses, temps de vol ou atténuation des signaux mécaniques, en vue de la reconstruction de ces grandeurs sur l'ensemble de la coupe,
- les figures 7A, 7B et 7C illustrent l'exemple de méthode d'obtention de la relation entre la pression capillaire Pc et la saturation en fluide S1 et éventuellement la vitesse de centrifugation.

## Description détaillée du dispositif

Sur la figure 1 on présente un exemple d'application de la méthode. Un signal électrique [E] est transmis à un ou plusieurs générateurs de signaux mécaniques [19] disposés par exemple le long d'un milieu poreux [16] contenant deux fluides en centrifugation dans un porte échantillon [5] . Les générateurs transforment le signal électrique par exemple en onde accoustique [A] qui parcours une partie du milieu avant d'être reçue par un ou plusieurs récepteurs [20]. Les récepteurs transforment les signaux reçus en signaux électriques [R] qui comparés au signal émis [E] fournissent une des caractéristiques de la propagation dans chaque partie traversée du milieu poreux, par exemple le temps de vol [t] . Cette caractéristique permet ensuite de calculer la saturation [S] des fluides dans chacune de ces parties, et de constituer des images de la répartition de cette saturation par exemple sous forme de profils [P] suivant l'alongement [L] du milieu poreux. (figure 1 A)

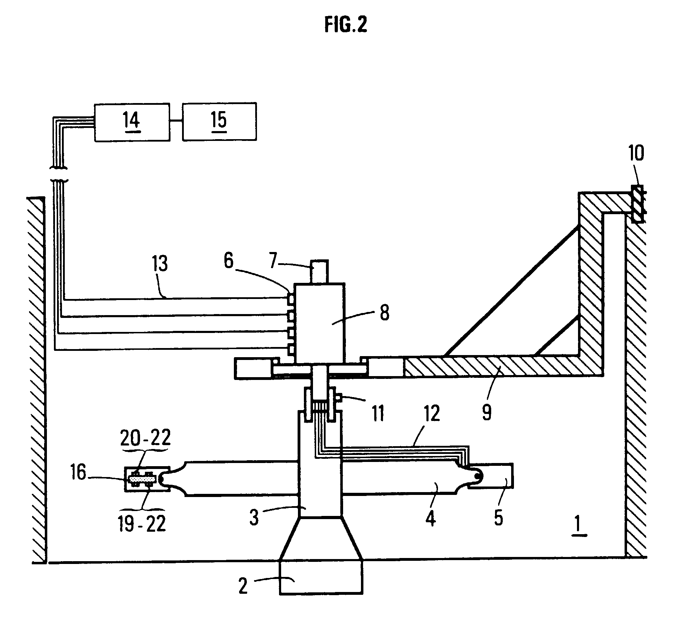

La figure 2 montre une vue d'ensemble du dispositif. La coupe transversale montre en premier lieu la centrifugeuse [I] qui peut être du type conventionnel ou non, par exemple le modèle *'Cool Spin'* distribuée par *MSE*. Cette centrifugeuse consiste en un moteur lequel guide un arbre [3] . L'arbre est emboîté à un rotor [4] lequel possède,par exemple, quatre bras auxquels sont adaptés des godets [5] dans lesquels les échantillons [16] sont insérés pour être centrifugés. Un système de contacts électriques tournant [6] , par exemple du type T13 distribué par *Air Précision*, est emboîté à l'axe de rotation de la centrifugeuse. Les contacts sont adaptés de telle manière que l'axe du contact [7] tourne avec l'axe de la centrifugeuse, le tambour [8] restant fixé par un bras [9] adapté au système du contact tournant et fixé, ou non, à l'extérieur [10] de la centrifugeuse.

L'emboîtement des contacts électriques tournant [11] est fait de telle sorte que les fils [12] qui sont branchés aux émetteurs récepteurs, aient la liberté d'être adaptés, avec un minimum d'encombrement, sur n'importe quel (un ou plusieurs) godet [5].

La transmission des signaux électriques d'émission et de réception, assurée par le système de contacts tournants, se fait par des fils [13] branchés sur les bornes existantes sur le tambour du contact électrique. Les fils sont branchés aux appareils de mesure [14] qui sont eux-mêmes connectés aux moyens de traitement et de contrôle [ 15 ] .

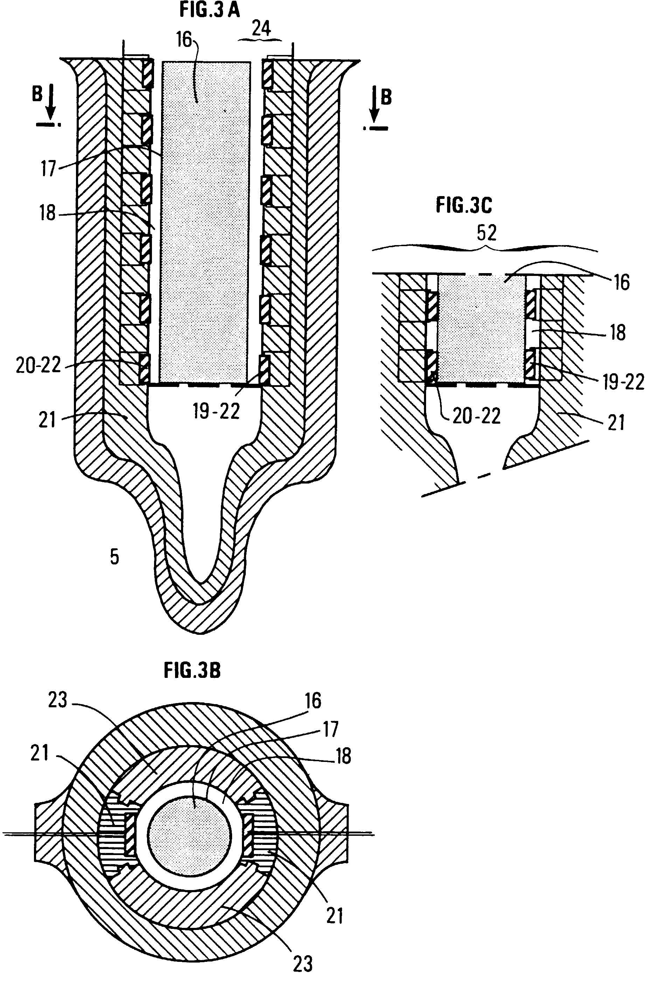

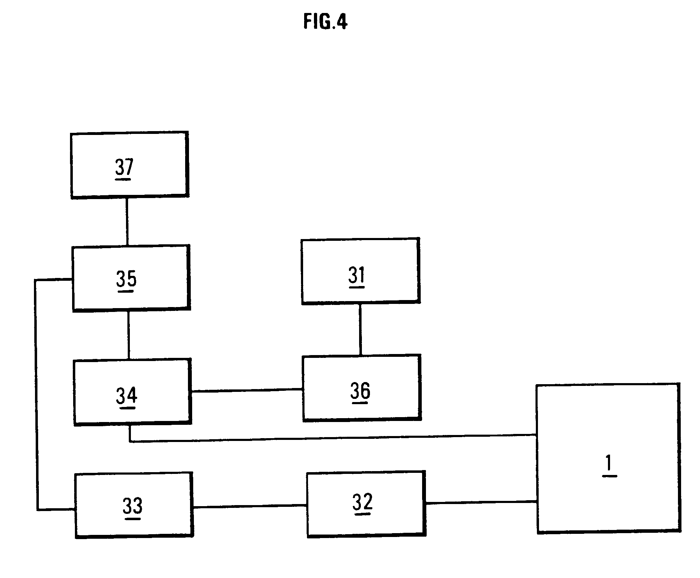

Les sources d'ondes mécaniques sont par exemple des transducteurs (Fig. 3 [22]) acoustiques qui peuvent être des céramiques piézoélectriques de forme parallélépipédique, distribuées par exemple par *Quartz et Silice* avec la référence P4-68. Ces céramiques peuvent être constituées de titane-zirconate de plomb Pb $Ti_{(i-x)}$ $ZR_x$ $O_3$ avec x voisin de 0,5. Les mêmes types d'émetteurs [19, 22] peuvent, par exemple, être utilisés comme récepteurs [20, 22] des ondes mécaniques. Les transducteurs transforment des signaux électriques en vibrations mécaniques. Les signaux électriques sont envoyés aux transducteurs par un générateur d'impulsion (Fig. 4, [31]) tel que le générateur Philips PS 51. Grâce à deux couches minces métalliques qui recouvrent les faces opposées du transducteur, l'impulsion électrique engendre une onde mécanique de même fréquence, laquelle peut être mais pas forcément celle de résonance des transducteurs. De préférence, il est possible d'utiliser des ondes acoustiques de longueur d'onde (5 à 8 mm par exemple) supérieure aux tailles caractéristiques du système étudié, taille des pores d'un milieu poreux, taille des particules d'une suspension, afin de limiter les phénomènes de diffusion du signal mécanique dans le système.

Ce signal mécanique transmis, atténué au moins en partie, est transformé en signal électrique par un récepteur, qui peut être l'émetteur lui même, si on travaille avec un système en réflexion, ou différent, si on travaille avec un système de paires émetteur-récepteur. Ce signal recueilli est éventuellement amplifié grâce à un amplificateur [32] par exemple *Ultrasonic Preamp* distribué par *Panametrics*.

Les signaux émis et transmis sont visualisés sur l'écran d'un oscilloscope [33] qui peut être, par exemple un Intelligent Oscilloscope System 5110 distribué par Gould. L'ouverture et fermeture des circuits électriques reliant les appareils de mesure aux transducteurs sont assurées par un commutateur [34] qui peut être un Kettley 705 scanner. Tout l'ensemble instrumental peut être commandé par un ordinateur [35], par exemple un HP 86, ou un HP Vectra QS 16 s, distribués par Hewlett Packard. Le signal d'émission peut être aussi amplifié au moyen d'un amplificateur de puissance [36] qui peut être un 2100 L RF Power Amplifier, distribué par EIN USA.

Les résultats peuvent être visualisés grâce à une imprimante ou une table traçante [37] , une console d'ordinateur ou un équipement vidéo par exemple.

Les figures 3 montrent de façon détaillée des exemples de montage des godets utilisés pour les mesures en centrifugation.

Les godets porte-échantillon sont en général des cylindres [5] pouvant être métalliques, aménagés à l'intérieur de façon à pouvoir porter l'ensemble de transducteurs. Une possibilité de montage est de fixer les transducteurs [19, 20, 22] sur les godets eux-mêmes (Fig. 3a). Une autre possibilité est de fixer les transducteurs directement sur l'échantillon (Fig. 3c), ou entre le godet et l'échantillon. L'échantillon, de forme préférentiellement cylindrique, peut être enrobé dans une gaine imperméable (de téflon par exemple) afin d'éviter les circulations latérales. Il peut être immergé dans un fluide [18] que peut contenir le godet [5].

Selon la figure 3B qui est une coupe selon l'axe 13B de la figure 3A, la paroi intérieure du godet porte-échantillon peut être revêtue d'une matière qui peut être en matière plastique dans laquelle il y a au moins une partie mobile [21] ou non contenant les transducteurs [22], et une partie fixe ou non [23]. La partie mobile [21] est en général aménagée de façon que plusieurs transducteurs, dont le nombre est limité uniquement par les dimensions des transducteurs et des échantillons, soit en contact avec la région qui fait le couplage mécanique des ondes [24], à savoir, mais pas forcément, un film [18] de liquide autour du système étudié.

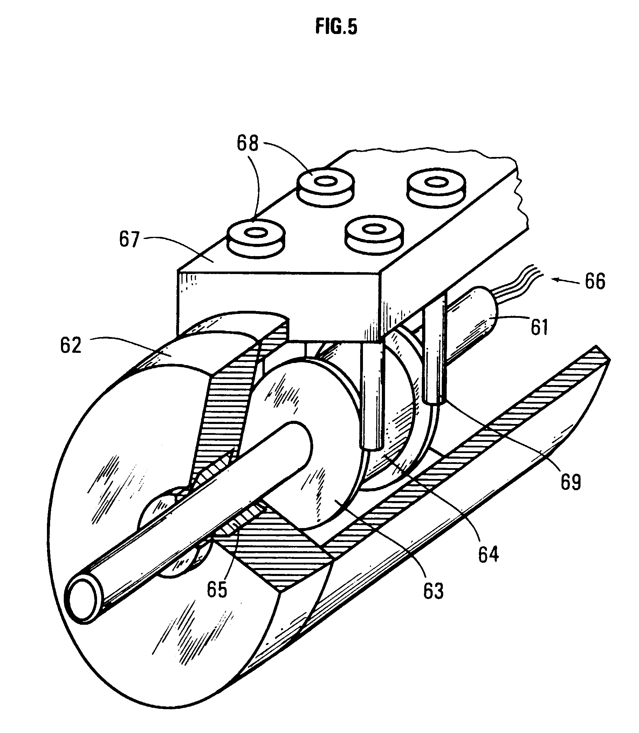

Les contacts tournants (6, Fig. 5) sont composés de deux cylindres coaxiaux : l'axe principal [61] (intérieur) et le cylindre extérieur [62]. L'axe est composé de bagues collectrices et de bagues résistantes [64] (autant que de contacts) disposées en série le long de l'axe. Tant l'axe que le cylindre externe peuvent tourner grâce à des roulements à bille [65], l'axe peut être creux de sorte à laisser passer les fils [66]. Au cylindre extérieur est accroché un bornier [67] avec autant de bornes [68] que de contacts; chaque borne est connectée à un cil [69] qui s'appuie sur une bague collectrice faisant ainsi le contact. La version actuellement disponible de ce système de transmission de signaux aux organes de contrôle et de traitement et à la centrifugeuse peut fonctionner jusqu'à une vitesse de rotation de 3500 tours par minute.

Les signaux mécaniques reçus au niveau des récepteurs sont comparés aux signaux émis pour obtenir, par exemple, la vitesse de propagation des signaux mécaniques longitudinal les plus rapides entre l'émetteur et le récepteur. Cette comparaison est notamment obtenue à partir de celle de signaux électriques correspondants, visualisés par exemple sur un oscilloscope, comme dit précédemment.

Dans le cas destiné à la mesure de saturations de fluides dans un milieu poreux, les vitesses de propagation (ou les temps de propagation ou les atténuations) sont ensuite transformées en saturation en fluides. Cette transformation utilise une calibration qui peut être réalisée de différentes façons.

Calibration

Dans le cas où on mesure les vitesses de propagation, un exemple de méthode de calibration qui peut être mis en oeuvre ici est donné par Bacri et Salin (Bacri J.C. et Salin D., 1986 : Sound velocity of a sand stone saturated with oil and brine at different concentrations. Geophysical Research Letters, V. 13, 4, 326-328) : avant centrifugation; la vitesse de propagation du son est mesurée pour différentes saturations dans un milieu poreux donné. La correspondance vitesse-saturation s'en déduit directement. Cette dépendance dépend notamment de la façon dont les fluides sont mis en place dans le milieu (injection de fluide mouillant ou de fluide non mouillant par exemple). Dans le cas de cet exemple, on utilisera donc la calibration qui correspond à la centrifugation à réaliser.

Cette méthode directe étant relativement longue, on peut mettre en oeuvre une autre calibration. Les mêmes auteurs ont montré que dans le cas d'un drainage la relation entre vitesse et saturation peut être obtenue à partir de la théorie de Biot et Gassmann (Biot M.A., 1956 : Theorie of propagation of elastic waves in a fluid saturated porous solid. J. Acous. Soc. Am., 28, 168-191 Gassman F., 1951 : Elastic waves through a paccking of spheres. Geophys., 16, 673-685).

Le mélange des deux fluides dans le milieu poreux est alors considéré comme un fluide équivalent de densité

$$\rho_{\text{fluide}} = S_1\rho_1 + S_2\rho_2$$

et de module d'élasticité

$$\kappa_{\text{fluide}} = 1/(S_1/\kappa_1 + S_2/\kappa_2),$$

$$S_1 + S_2 = 1.$$

Selon la théorie, la vitesse des ondes longitudinales les plus rapides est alors

$$V = \sqrt{\kappa_{effectif} / \rho_{effectif}}$$

avec

$$1/\kappa_{effectif} = \emptyset/\kappa_{fluide} + (1-\emptyset)/\kappa_{solide}$$

$$\rho_{effectif} = a \, \rho_{fluide} \frac{(1-\emptyset) \rho_{solide} + (1-a^{-1})\emptyset \rho_{fluide}}{\emptyset (1-\emptyset) \rho_{solide} + (a-2\emptyset+\emptyset^2)\rho_{fluide}}$$

$\kappa_{effectif}$ et $\rho_{effectif}$ sont les compressibilité et densité effectives du milieu. a est la tortuosité, $1-\emptyset$ la proportion volumique du solide ou la concentration en particule dans le cas d'une suspension. Ces paramètres étant les seules grandeurs à mesurer dans ce cas, la calibration peut être obtenue rapidement.

D'autres méthodes de calibration peuvent être mise en oeuvre. Le principe général peut être

- d'une part de mesurer la répartition des fluides dans le système qui doit être centrifugé à partir de techniques usuelles (gammagraphie, rayons X, bilans volumique ou massique ...), ou non,
- d'autre part de mesurer les caractéristiques de propagation des signaux mécaniques (vitesses longitudinale, transverse, atténuation.....).

Reconstruction de profils ou d'images à 2 ou à 3 dimensions.

La reconstruction de profil et d'images des concentrations dans le système en centrifugation dépend essentiellement du nombre et de la disposition des émetteurs et des récepteurs autour du milieu.

Dans le cas d'une disposition linéaire, suivant l'axe d'un bras de la centrifugeuse par exemple (Fig. 1), les valeurs moyennes de l'atténuation et du temps de vol ou de la vitesse des signaux mécaniques sont obtenues en différents points de l'axe . Un profil continu de ces valeurs peut alors être reconstruit, par interpolation ou ajustement par des fonctions polynomiales ou exponentielles par exemple comme le montre la figure 1A où est représentée la saturation en fluide en fonction de la distance suivant l'axe du bras de la centrifugeuse.

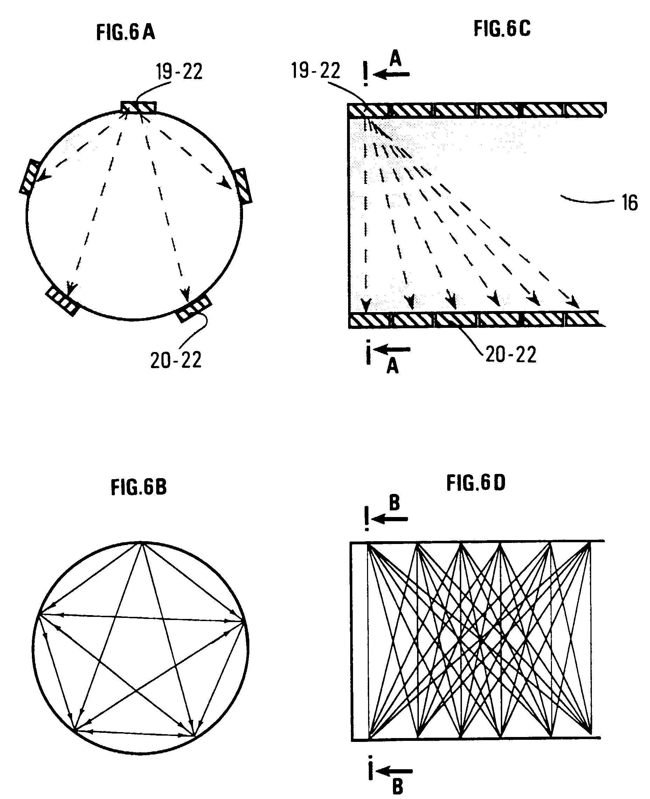

Des images à 2 dimensions pourront être réalisées sur des sections longitudinales ou transverses ou autre. Il est prévu pour cela de pouvoir acquérir un nombre suffisant de mesures, en un délai assez bref, sur un système en centrifugation donné. Par exemple, les figures 6C et 6A (vue en coupe selon l'axe AA) montre des sections transverse et longitudinales de systèmes équipés de transducteurs [22] utilisés tantôt en émetteur, tantôt en récepteur. L'émission au transducteur 1 est reçu en 2,3,4,5,....n, puis l'émission en 2 est reçu en 3.4,5,6,....n,1, et ainsi de suite..... . On dispose ainsi de mesures multiples sur différentes parties de la section (Fig. 6D et 6B) (vue en coupe selon l'axe BB) à partir desquelles une image peut être reconstituée par exemple en utilisant une méthode parmi celles utilisées en tomographie par ultrasons, par rayons X ou par résonance magnétique nucléaire (Herman G.T., 1980 : Image reconstruction from projections, the fundamentals of computerized tomography. Acad. Press. New York).

On peut, par ailleurs, reconstituer des images à 3 dimensions, par exemple à partir de multiples sections reconstituées en différentes parties du système, ou directement à partir de mesure éparses dans le système (Gordon R. et Herman G.T., 1974 : Three-dimensional reconstruction from projections : a review of algorithms. IN, International Review of Cytology, V 38, Bourneet Danielli eds., 111-151).

On peut aussi automatiser sur ordinateur ces reconstructions, et les utiliser pour calculer des valeurs moyennes, sur la totalité du système, des concentrations des constituants. Ces valeurs moyennes calculées pourront être comparées par ailleurs aux valeurs moyennes directement mesurables pendant la centrifugation au niveau des fenêtres des godets. En cas de désaccord un méthode de correction de calibration sera mise en oeuvre.

La présente méthode peut être mise en oeuvre pour le calcul de la pression capillaire et des perméabilités relatives de fluides dans un milieu poreux.

Dans le cas où la méthode est appliquée à la mesure ou à la reconstitution de profils suivant l'axe d'un bras de la centrifugeuse, des saturations de deux fluides, 1 et 2, dans un milieu poreux en centrifugation, la pression capillaire ou les perméabilités relatives des dits fluides peuvent être calculées. Le cas d'une injection d'un fluide 1 non mouillant dans un milieu poreux saturé d'un fluide 2 est donné en exemple ici.

Dans ce cas, suivant la procédure usuelle, le milieu poreux est mis en centrifugation à la vitesse de rotation sensiblement constante V, jusqu'à ce que l'équilibre soit atteint, c'est à dire qu'il n'y ait plus de déplacement de fluides vers l'extérieur du milieu (le contrôle se faisant à travers la fenêtre à l'extrémité du godet). Soient r la distance à l'axe de la centrifugeuse et $r_1$ et $r_2$ les densités des deux fluides.

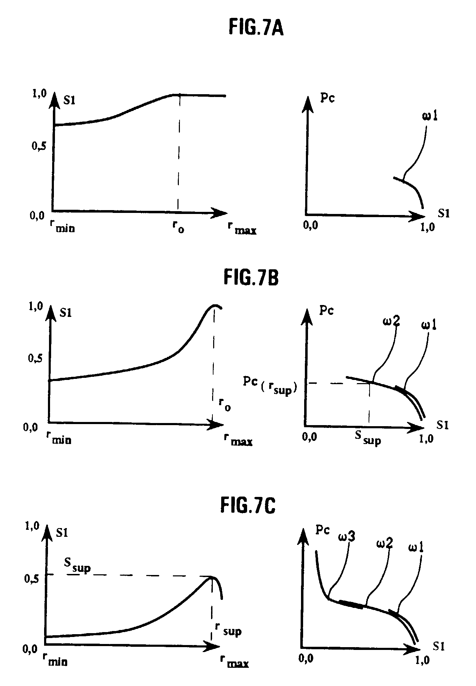

Pour une vitesse V donnée suffisamment faible, la saturation $S_2$ en fluide 2 et donc la pression capillaire, restent nulles dans une partie ou à l'extrémité du milieu poreux . L'approche de Hassler et Brunner (1945) s'applique alors et à une distance r, la pression capillaire s'écrit $Pc_{(r)} = 1/2 (r_1 - r_2) V^2 (r_o^2 - r^2)$.
$r_o$ désigne la valeur de r à laquelle la saturation en fluide 2 devient nulle (Fig. 7 a).

Cette valeur de $r_{max}$ ainsi que l'ensemble du profil de saturation, $S_{1(r)}$, en fluide 1 sont fournis par la méthode selon l'invention. Disposant ainsi de $Pc_{(r)}$ et de $S_{1(r)}$ on reconstruit immédiatement $Pc_{(S_1)}$ pour $S_1$ dans l'intervalle , $I_1 : [S_{1(r_{min})},$ 1].

La vitesse de rotation peut être ensuite augmentée suivant un nombre quelconque, ou prédéterminé, de paliers. Cela a pour effet de repousser $r_o$ vers $r_{max}$ et de réduire $S_{1(rmin)}$. Si $r_o$ reste inférieur ou égal à $r_{max}$ (condition de Hassler et Brunner) on obtient ainsi $Pc_{(S_1)}$ sur une gamme de valeurs pour $S_1$ qui englobe l'intervalle $I_1$ précédent. Si le milieu poreux est homogène, et si la loi de pression capillaire ne dépend pas de la vitesse de rotation V ou de la façon dont elle est atteinte, la courbe $Pc_{(S_1)}$ ainsi obtenue contient la précédente (Fig. 7 b).

A ce titre, on peut utiliser l'invention pour estimer l'homogénéité d'un milieu ou la dépendance éventuelle de la loi de pression capillaire en fonction de la vitesse de rotation et de la façon dont elle est atteinte.

S'il n'y a plus de zone où la saturation en fluide 2 est nulle, $S_1$ varie dans l'intervalle $I_2 = [S_{1(r_{min})}, S_{sup}]$, il est proposé par exemple de se servir de la partie de la courbe $Pc_{(S_1)}$ déjà déterminée. Du profil mesuré, on déduit le rayon $r_{sup}$ auquel la valeur $S_{sup}$ est atteinte. De la courbe $Pc_{(S_1)}$ on déduit la pression capillaire correspondante, ce qui permet d'écrire pour r inférieur à $r_{sup}$,
$Pc_{(r)} = 1/2 (r_1 - r_2) V^2 (r_{sup}^2 - r^2) Pc_{(rsup)}$. Cela permet d'obtenir $Pc_{(S_1)}$ sur l'intervalle 12 et donc de compléter, la courbe déjà déterminée dans la mesure où $S_{1(r_{min})}$ est plus petit pour l'intervalle $I_2$ que pour $I_1$ (Fig. 7 c).

La vitesse de rotation peut être ainsi augmentée, dans les limites de l'appareillage, jusqu'à couvrir la plus grande partie possible de l'intervalle $[S_{1\ irréductible}, 1]$.

La détermination des vitesses de rotation optimales, le choix des paliers de vitesses et l'identification de $Pc_{(S_1)}$ peuvent être gérés par ordinateur.

Les perméabilités relatives $k_i$ peuvent de même être obtenues suivant différentes méthodes, principalement à partir de profils de saturation à différents instants. Par exemple une relation entre les deux perméabilités relatives peut être obtenue sous la forme :

$$\frac{m_1}{k_1} \int_r^{r_{min}} \emptyset \frac{dS_1}{dt} dr + \frac{m_2}{k_2} \int_r^{r_o} \emptyset \frac{dS_1}{dt} dr = k \left( \frac{dPc}{dr} + (r_1 - r_2) V^2 r \right)$$

avec $m_1$ et $m_2$ les viscosités des fluides 1 et 2.

A un instant, t, de la centrifugation, la relation $Pc(S_1)$ et le profil $S_1(r,t)$ mesuré fournissent $Pc(r,t)$, puis $\frac{dPc}{dr}$. Le profil $S_1(r,t)$ fournit $r_o$ et le profil $S_1(r,t+dt)$, mesuré à $t + dt$, permet d'obtenir $\frac{dS_1}{dt}$. Les autres grandeurs étant connues, la relation s'écrit

$$A_{(r,t)} \frac{1}{k_{1}{}^{(r,t)}} + B_{(r,t)} \frac{m_1}{k_{2}{}^{(r,t)}} = C_{(r,t)},$$

que l'on transforme en

$$A_{(s_1)} \frac{1}{k_{1}{}^{(s_1)}} + B_{(s_1)} \frac{1}{k_{2}{}^{(s_1)}} = C_{(s_1)}$$

en utilisant le profil $S_1(r,t)$. Si le milieu est homogène et si les perméabilités relatives ne dépendent pas de la vitesse de rotation V ou de la façon dont elle est atteinte. cette relation ne dépend effectivement pas du temps (ou V). Comme pour la pression capillaire, il est donc possible ici de tester ces hypothèses ou de mesurer une éventuelle dépendance.

Cette relation permet d'obtenir les perméabilités relatives si l'on dispose par ailleurs d'une autre relation. Le rapport des perméabilités relatives par exemple peut être obtenu simplement par la méthode de Welge (Welge H., 1952 : A simplified method for computing oil recovery by gas or water drive. Trans AIME, V. 195, 91).

En l'absence de relation complémentaire d'autres méthodes peuvent être mise en oeuvre. Des simulations numériques de la centrifugation pourront, par exemple, être utilisées pour obtenir les courbes $k_1{}^{(S_1)}$ et $k_2{}^{(S_1)}$ qui conduisent à la meilleure simulation. L'apport de la présente invention dans ce genre de méthode est d'une part de fournir une courbe de pression capillaire fiable pour cette simulation, d'autre part de fournir un nombre important de mesures de saturation ou de profils en cours de centrifugation que la simulation devra reproduire, donnant ainsi plus de précision aux courbes $k_1{}^{(S_1)}$ et $k_2{}^{(S_1)}$.

## Revendications

1. Procédé de mesure de la répartition des concentrations de constituants d'un milieu contenant au moins un fluide, comprenant la mise en centrifugation, dans des conditions appropriées, dudit milieu (16) dans une centrifugeuse (1), caractérisé par les étapes suivantes :

   a) on émet, pendant la centrifugation un signal mécanique dans une gamme de fréquences et d'intensités adéquates, à partir d'au moins un point d'émission (19) au contact ou au voisinage immédiat du milieu (16) en centrifugation,
   b) on reçoit le signal transmis correspondant par au moins un point de réception (20) au contact ou au voisinage immédiat du milieu en centrifugation après que le signal mécanique ait traversé au moins une partie du dit milieu (16) s'étendant entre ledit point d'émission et ledit point de réception,
   c) on mesure, pour chaque couple de points d'émission et de réception, au moins une caractéristique de propagation du signal mécanique, telle que la vitesse de propagation dans le milieu entre le point d'émission et le point de réception dudit signal,
   d) on détermine, par des moyens de traitement appropriés, à partir des dites mesures de caractéristiques de propagation du signal, la répartition des concentrations des constituants dans le milieu.

2. Procédé selon la revendication 1 dans lequel on émet le signal, lors de l'étape a, par une pluralité de points d'émission simultanément ou successivement.

3. Procédé selon la revendication 1 ou 2 dans lequel, lors de l'étape b, au moins un point d'émission est utilisé au moins une fois comme point de réception.

4. Procédé selon l'une des revendications 1 à 3 dans lequel on répète à différents instants les étapes a, b, c, et d selon la revendication 1 en vue d'obtenir la dite répartition des concentrations de constituants du milieu à ces différents instants.

5. Procédé selon l'une des revendications 1 à 4 dans lequel une pluralité de points d'émission et une pluralité de points de réception sont disposées dans le plan d'une tranche du milieu en centrifugation et dans lequel on détermine la répartition des concentrations des constituants du milieu dans ce plan.

6. Procédé selon l'une des revendications 1 à 4 dans lequel une pluralité de points d'émission et une pluralité de points de réception sont situées suivant une direction suivant laquelle on détermine la répartition des concentrations des constituants .

7. Procédé selon l'une des revendication 1 à 6 dans lequel le signal mécanique a une fréquence comprise entre 100 et 2000 kilohertz.

8. Procédé selon la revendication 7 dans lequel le signal mécanique est une onde acoustique de 250 à 500 kilohertz.

9. Procédé selon l'une des revendications 1 à 8 dans lequel le milieu est un milieu poreux contenant deux fluides.

10. Procédé selon l'une des revendications 1 à 8 dans lequel ledit fluide comprend une suspension de particules ou une émulsion.

11. Procédé selon l'une des revendications 6 à 10 dans lequel la dite direction de répartition des points d'émission et

**EP 0 473 500 B1**

de réception le long de laquelle la détermination du dit profil de concentration est réalisée, est celle de l'axe d'un bras de la centrifugeuse.

12. Procédé selon l'une des revendications 1 à 11 dans lequel au moins une caractéristique de propagation du signal mécanique est la vitesse de propagation dans le milieu entre le point d'émission et le point de réception dudit signal.

13. Appareillage de mesure de la répartition des concentrations des constituants d'un milieu selon l'une des revendications 1 à 12, caractérisé en ce qu'il comporte en combinaison :

- une centrifugeuse ayant un nombre prédéterminé de porte-échantillons (5) contenant le dit milieu (16) et étant adaptée à opérer à une pluralité de vitesses de rotation,
- au moins une source (19) d'émission des signaux mécaniques, adaptée à délivrer une gamme de fréquences et d'intensités adéquates, située à l'intérieur ou au voisinage immédiat des porte-échantillons (5),
- au moins un moyen (20) de réception des signaux transmis ayant traversé le milieu (16), contenu à l'intérieur ou dans le voisinage immédiat des porte-échantillons (5),
- ladite centrifugeuse comprenant des moyens de contacts (6) tournants, adaptés pour la transmission, pendant la rotation, des signaux électriques produisant les signaux mécaniques émis et les moyens de contacts tournants étant en outre adaptés à la transmission, durant la rotation, de signaux électriques produits par les moyens de réception (20),
- des moyens de mesure (14) d'une caractéristique de propagation des signaux mécaniques transmis, reliés aux sources d'émission (19) et aux moyens de réception (20) par l'intermédiaire des dits moyens de contacts tournants.
- des moyens de traitement et de contrôle (15), pour déterminer la mesure de la répartition des concentrations, connectés aux dits moyens de mesure (14) et à la dite centrifugeuse (1).

14. Appareillage selon la revendication 13 dans lequel la source d'émission du signal est un transducteur acoustique (19) adapté à générer des ondes mécaniques dans la gamme de fréquence 100-2000 kilohertz et de préférence une onde de fréquence unique comprise entre 250 et 500 kilohertz .

15. Appareillage selon l'une des revendications 13 à 14 dans lequel au moins une source d'émission (19,22) comprend un moyen de réception des signaux.

16. Utilisation du dispositif selon l'une des revendications 13 à 15 dans un procédé de mesures des courbes de pression capillaire et des perméabilités relatives dans un milieu poreux contenant au moins deux fluides.

**Patentansprüche**

1. Verfahren zum Messen der Verteilung von Konzentrationen von Bestandteilen eines Milieus, das wenigstens ein Fluid enthält, das ein Zentrifugieren des Milieus (16) in einer Zentrifuge (1) unter geeigneten Bedingungen umfaßt, welches durch die folgenden Schritte gekennzeichnet ist:

   a) man sendet während des Zentrifugierens ein mechanisches Signal in einem Bereich von adäquaten Frequenzen und Intensitäten auf der Grundlage wenigstens eines Sendepunktes (19) in Kontakt oder in unmittelbarer Nähe des Milieus (16) beim Zentrifugieren,
   b) man empfängt das entsprechende übertragene Signal durch wenigstens einen Empfangspunkt (20) in Kontakt oder in unmittelbarer Nähe des Milieus beim Zentrifugieren, nachdem das mechanische Signal wenigstens einen Teil des Milieus (16), welches sich zwischen dem Sendepunkt und dem Empfangspunkt erstreckt, durchquert hat,
   c) man mißt für jedes Paar von Sendepunkten und Empfangspunkten wenigstens eine Übertragungscharakteristik des mechanischen Signales, wie zum Beispiel die Übertragungsgeschwindigkeit des Signales in dem Milieu zwischen dem Sendepunkt und dem Empfangspunkt,
   d) man bestimmt durch geeignete Einrichtungen zur Bearbeitung auf der Grundlage der Messungen von Übertragungscharakteristiken des Signales die Verteilung der Konzentrationen der Bestandteile in dem Milieu.

2. Verfahren nach Anspruch 1, bei welchem man das Signal während des Schrittes a durch eine Vielzahl von Sendepunkten gleichzeitig oder aufeinanderfolgend sendet.

3. Verfahren nach Anspruch 1 oder 2, bei welchem wenigstens ein Sendepunkt während des Schrittes b wenigstens einmal als Empfangspunkt verwendet wird.

4. Verfahren nach einem der Ansprüche 1 bis 3, bei welchem man die Schritte a, b, c und d entsprechend dem Anspruch 1 zu verschiedenen Zeitpunkten im Hinblick darauf, die Verteilung der Konzentrationen der Bestandteile des Milieus zu diesen verschiedenen Zeitpunkten zu erhalten, wiederholt.

5. Verfahren nach einem der Ansprüche 1 bis 4, bei welchem eine Vielzahl von Sendepunkten und eine Vielzahl von Empfangspunkten in der Ebene einer Schnittfläche des Milieus beim Zentrifugieren angeordnet werden und bei welchem man die Verteilung der Konzentrationen der Bestandteile des Milieus in dieser Ebene bestimmt.

6. Verfahren nach einem der Ansprüche 1 bis 4, bei welchem eine Vielzahl von Sendepunkten und eine Vielzahl von Empfangspunkten entsprechend einer Richtung angeordnet werden, entsprechend der man die Verteilung der Konzentrationen der Bestandteile bestimmt.

7. Verfahren nach einem der Ansprüche 1 bis 6, bei welchem das mechanische Signal eine Frequenz einschließlich zwischen 100 und 2000 Kilohertz aufweist.

8. Verfahren nach Anspruch 7, bei welchem das mechanische Signal eine akustische Welle von 250 bis 500 Kilohertz ist.

9. Verfahren nach einem der Ansprüche 1 bis 8, bei welchem das Milieu ein poröses Milieu ist, das zwei Fluide enthält.

10. Verfahren nach einem der Ansprüche 1 bis 8, bei welchem das Fluid eine Suspension von Partikeln oder eine Emulsion umfaßt.

11. Verfahren nach einem der Ansprüche 6 bis 10, bei welchem die Richtung zur Verteilung der Punkte zum Senden und zum Empfang, längs welcher die Bestimmung des Konzentrationsprofiles vorgenommen wird, diejenige der Achse eines Armes der Zentrifuge ist.

12. Verfahren nach einem der Ansprüche 1 bis 11, bei welchem wenigstens eine übertragungscharakteristik des mechanischen Signales die übertragungsgeschwindigkeit des Signales in dem Milieu zwischen dem Sendepunkt und dem Empfangspunkt ist.

13. Vorrichtung zum Messen der Verteilung von Konzentrationen von Bestandteilen eines Milieus nach einem der Ansprüche 1 bis 12, dadurch gekennzeichnet, daß sie in Kombination umfaßt:

   - eine Zentrifuge, die eine vorbestimmte Anzahl von Probenträgern (5) aufweist, welche das Milieu (16) enthalten, und die geeignet ist, bei einer Vielzahl von Drehgeschwindigkeiten zu arbeiten,
   - wenigstens eine Quelle (19) zum Senden von mechanischen Signalen, die geeignet ist, einen Bereich von adäquaten Frequenzen und Intensitäten zu liefern, welche im Inneren oder in unmittelbarer Nähe der Probenträger (5) angeordnet ist,
   - wenigstens eine Einrichtung (20) zum Empfang von übertragenen Signalen, die das Milieu (16) durchquert haben, welche im Inneren oder in unmittelbarer Nähe der Probenträger (5) enthalten ist,
   - die Zentrifuge Drehkontakteinrichtungen (6) umfaßt, die während der Drehung für die Übertragung von elektrischen Signalen, welche die gesendeten mechanischen Signale erzeugen, geeignet sind, und die Drehkontakteinrichtungen außerdem während der Drehung zur Übertragung von elektrischen Signalen, welche durch die Einrichtungen (20) zum Empfang erzeugt sind, geeignet sind,
   - Einrichtungen (14) zum Messen einer Übertragungscharakteristik der übertragenen mechanischen Signale, die mit den Quellen (19) zum Senden und mit den Einrichtungen (20) zum Empfang unter Zwischenschaltung der Drehkontakteinrichtungen verbunden sind,
   - Einrichtungen (15) zur Bearbeitung und zur überwachung, um die Messung der Verteilung der Konzentrationen zu bestimmen, die mit den Einrichtungen (14) zum Messen und mit der Zentrifuge (1) verbunden sind.

14. Vorrichtung nach Anspruch 13, bei welchem die Quelle zum Senden des Signales ein akustischer Wandler (19) ist, der geeignet ist, mechanische Wellen in dem Frequenzbereich von 100 bis 2000 Kilohertz und vorzugsweise eine Welle einer einzigen Frequenz einschließlich zwischen 250 und 500 Kilohertz zu erzeugen.

**15.** Vorrichtung nach einem der Ansprüche 13 bis 14, bei welchem wenigstens eine Quelle (19, 22) zum Senden eine Einrichtung zum Empfang der Signale umfaßt.

**16.** Verwendung der Vorrichtung nach einem der Ansprüche 13 bis 15 in einem Verfahren zum Messen von Kurven eines Kapillardruckes und von relativen Permeabilitäten in einem porösen Milieu, das wenigstens zwei Fluide enthält.

**Claims**

**1.** Process for the measurement of the distribution of the concentrations of constituents of a medium containing at least one fluid, comprising centrifuging under appropriate conditions, of the medium (16) in a centrifuge (1) and characterized by the following stages:

a) during centrifuging, a mechanical signal is emitted in an adequate frequency and intensity range from at least one emission point (19) in contact with or in the immediate vicinity of the centrifuged medium (16),

b) the corresponding transmitted signal is received by at least one reception point (20) in contact with or in the immediate vicinity of the centrifuged medium after the mechanical signal has traversed at least a part of the said medium (16) extending between said emission point and said reception point,

c) for each pair of emission and reception points, a measurement is performed of at least one propagation characteristic of the mechanical signal, such as the propagation velocity in the medium between the emission point and the reception point of said signal and

d) the distribution of the concentrations of the constituents in the medium is determined by appropriate processing means from said measurements of the propagation characteristics of the signal.

**2.** Process according to claim 1, wherein, during stage a, the signal is emitted by a plurality of emission points either simultaneously or successively.

**3.** Process according to claims 1 or 2, wherein, during stage b, at least one emission point is used at least once as the reception point.

**4.** Process according to any one of the claims 1 to 3, wherein stages a,b,c and d according to claim 1 are repeated at different times with a view to obtaining said distribution of the concentrations of the constituents of the medium at these different times.

**5.** Process according to any one of the claims 1 to 4, wherein a plurality of emission points and a plurality of reception points are located in the plane of a section of the centrifuged medium and wherein the distribution of the concentrations of the constituents of the medium in this plane is determined.

**6.** Process according to any one of the claims 1 to 4, wherein a plurality of emission points and a plurality of reception points are located in a direction along which is determined the distribution of the concentrations of the constituents

**7.** Process according to any one of the claims 1 to 6, wherein the mechanical signal has a frequency between 100 and 2000 kHz.

**8.** Process according to claim 7, wherein the mechanical signal is a sound wave of 250 to 500 kHz.

**9.** Process according to any one of the claims 1 to 8, wherein the medium is a porous medium containing two fluids.

**10.** Process according to any one of the claims 1 to 8, wherein the medium is a suspension of particles or an emulsion.

**11.** Process according to any one of the claims 6 to 10, wherein the said direction of the distribution of the emission and reception points and the determination of said profile concentration is that of the axis of the centrifuge arm.

**12.** Process according to any one of the claims 1 to 11, wherein at least one characteristic of mechanical signal propagation is the propagation velocity in the medium between the emission point and the reception point of said signal.

13. Apparatus for measuring the distribution of concentrations of constituents of a medium, characterized in that it comprises in combination:

a centrifuge able to operate at a plurality of rotation speeds and having a predetermined number of sample holders (5) containing the said medium (16);

at least one emission (19) source for the mechanical signals able to supply an adequate range of frequencies and intensities and located inside or in the immediate vicinity of the sample holders (5) ;

at least one reception means (20) for the transmitted signals, which have traversed the medium and located inside or immediate vicinity of the sample holder;

said centrifuge having suitable means (16) of the rotary contact for the transmission, during rotation, of electrical signals used for producing the mechanical signals emitted and the means of the rotary contacts being further adapted to the transmission, during rotation, of electrical signals produced by the reception means (20) ;

means (14) for measuring a propagation characteristic of the mechanical signals transmitted, linked with the emission sources (19) and the reception means (20) via the means of the rotary contacts ; and

processing and checking means (15) for determining the measurement of the distribution of the concentrations connected to said measuring means (14) and to said centrifuge (1).

14. Apparatus according to claim 13, wherein the signal emission source is a sound transducer (19) able to generate mechanical waves in the frequency range 100 to 2000 kHz and preferably a single frequency wave between 250 and 500 kHz.

15. Apparatus according to either of the claims 13 and 14, wherein at least one emission source (19, 22) comprises reception means of the signals.

16. Use of the apparatus according to any one of the claims 13 to 15 in a process for measuring capillary pressure curves and relative permeabilities in a porous medium containing at least two fluids.

**FIG.1**

**FIG.1A**

# FIG.2

**FIG.3 A**

16    24

B

17

18

20-22

21

19-22

5

**FIG.3C**

52

16

18

19-22

20-22

21

**FIG.3B**

23    16

17

21    18

21

23

**FIG.4**

# FIG.5

**FIG.6 A**

19-22

20-22

**FIG.6 C**

19-22

A

16

20-22

A

**FIG.6 B**

**FIG.6 D**

B

B

**FIG.7A**

**FIG.7B**

**FIG.7C**